# EUROPÄISCHE PATENTSCHRIFT

(11) **EP 1 045 497 B1**
(45) Veröffentlichungstag und Bekanntmachung des Hinweises auf die Patenterteilung: **07.11.2007**
(21) Anmeldenummer: 00107288.3
(22) Anmeldetag: 04.04.2000
(51) Int. Cl.: H02B 1/21

(54) **Adaptersystem für modulare Lastabgänge**
Adapter system for modular load output
Système adaptateur pour sortie de charge modulaire

(30) Priorität: 15.04.1999 DE 19916970
(43) Veröffentlichungstag der Anmeldung: 18.10.2000
(73) Patentinhaber: Moeller GmbH, 53115 Bonn (DE)
(72) Erfinder: Kessler, Heide, 53121 Bonn (DE); Müsseler, Willi, 53347 Alfter (DE)

(56) Entgegenhaltungen:
- EP-A- 0 642 197

## Beschreibung

Die Erfindung betrifft ein Adaptersystem für modulare Lastabgänge, wie sie im Rahmen eines dezentralen Vernetzungssystems zum Schalten und Steuern von Motoren und Maschinen zu finden sind.

Aus der Druckschrift DE 197 44 827 ist ein derartiges Adaptersystem bekannt, Es besteht aus einem Sammelschienenadapter zur Befestigung auf und zur Stromaufnahme von Stromsammelschienen sowie aus einem auf diesem zu befestigenden Vernetzungsbaustein mit oder ohne Intelligenz, auf das elektrische Schaltgeräte aufsetzbar sind. Oft ist es erforderlich, an Schaltgeräte Hilfsmodule seitlich anzubauen, wodurch sich unterschiedliche Baubreiten für die Lastabgänge ergeben. Sind mehrere Lastabgänge unterschiedlicher Baubreite nebeneinander anzuordnen, dann sind dafür ebenfalls unterschiedliche Adaptersysteme mit verschiedenen Baubreiten vorzusehen. Die Baubreite der Adaptersysteme ist an die Baubreite der aufzusetzenden Schaltgeräte allein oder der Kombination von Schaltgerät mit seitlichem Hilfsmodul anzupassen, um die Sammelschienen aus Gründen der Berührungssicherheit lückenlos von den Adaptersystemen zu überdecken. In der Druckschrift EP 0 642 197 A1 wird ein Geräteträger beschrieben, der ein mit Sammelschienen verbindbares Adapterunterteil und ein der Aufnahme mindestens eines elektrischen Installationsgerätes dienendes Adapteroberteil aufweist. Das Adapterunterteil und Adapteroberteil sind als separate Bauteile ausgebildet, wobei mit einem Adapterunterteil definierter Baugröße Adapteroberteile unterschiedlicher Baugröße verbindbar sind.

Der Erfindung liegt die Aufgabe zugrunde, möglichst wenig unterschiedliche Module zu benötigen.

Ausgehend von einem Adaptersystem der eingangs genannten Art wird die Aufgabe erfindungsgemäß durch die kennzeichnenden Merkmale des unabhängigen Anspruches gelöst, während den abhängigen Ansprüchen vorteilhafte Weiterbildungen der Erfindung zu entnehmen sind.

Die vorgeschlagene Lösung bietet die Möglichkeit, den Vernetzungsbaustein je nach Erfordernis entweder direkt mit einem Sammelschienenadapter gleicher Baubreite oder mit einem Sammelschienenadapter größerer Baubreite zu verbinden. Dadurch ist es möglich, bei Verwendung von Schalt- oder Steuergeräten mit oder ohne seitlich angebauten Hilfsmodulen oder bei Verwendung von Schalt- oder Steuergeräten unterschiedlicher Baubreite die zu verwendenden Sammelschienenadapter unterschiedlicher Baubreite geschlossen nebeneinander anzuordnen. Den Vernetzungsbaustein wird seitlich unter Zuhilfenahme eines oder mehrerer Verbindungselemente mit dem Sammelschienenadapter verbunden. Dies erlaubt, ohne Änderung der zwischen Vernetzungsbausteinen und Sammelschienenadaptern gleicher Baubreite vorgesehenen Verbindungsmittel, in der Regel Schraub-, Klemm- oder Rastverbindungen, unter teilweise Verwendung dieser Verbindungsmittel in einfacher Weise eine zuverlässige Verbindung zwischen Vernetzungsbausteinen und demgegenüber breiteren Sammelschienenadaptern herzustellen.

Das Verbindungselement ist zum einen vorteilhaft über Nut- und Federelemente an dem Vernetzungsbaustein seitlich zu befestigen. Das Verbindungselement ist zum anderen vorteilhaft über Schraubelemente, die in das gegenüber dem Vernetzungsbaustein überstehende Frontteil des Sammelschienenadapters größerer Baubreite eingreifen, zu befestigen. Die Schraubverbindung kann zweckmäßig Teil einer Schraubverbindung zwischen einem Vemetzungsbaustein und einem Sammelschienenadapter gleicher Baubreite sein.

Weitere Einzelheiten und Vorteile der Erfindung ergeben sich aus dem folgenden, anhand von Figuren erläuterten Ausführungsbeispiel. Es zeigen
- Figur 1:: einen modularen Lastabgang mit einem erfindungsgemäßen Adaptersystem in perspektivischer Darstellung;
- Figur 2:: zwei nebeneinander angeordnete erfindungsgemäße Adaptersysteme in auseinandergezogener perspektivischer Darstellung.

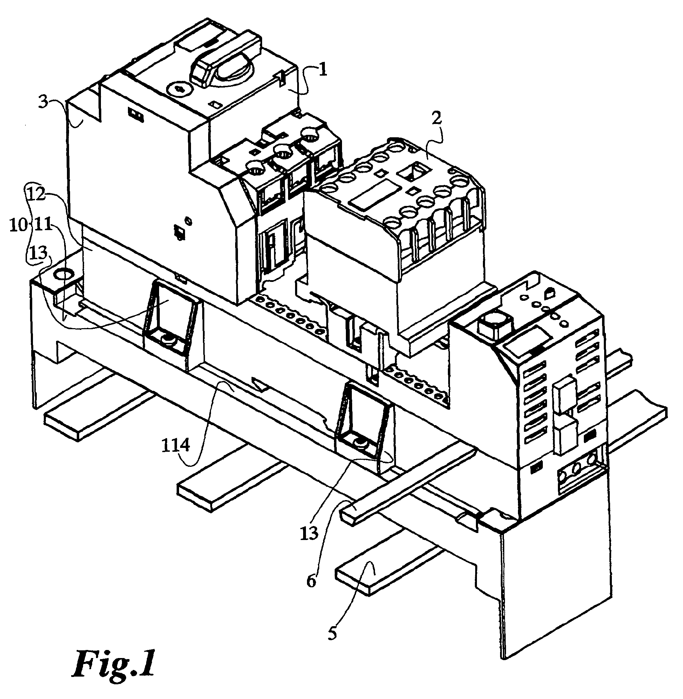

Nach Fig. 1 besteht der modulare Lastabgang aus einem Adaptersystem 10 und darauf aufgeschnappte Schalt- und Steuergeräte in Form eines handbetriebenen Motorschutzschalters 1 und eines elektromagnetischen Schaltgerätes 2. Das Adaptersystem 10 besteht aus einem Sammelschienenadapter 11 und einem Vernetzungsbaustein 12. Am Motorschutzschalter 1 ist seitlich ein Hilfsschaltermodul 3 angebaut. Der Motorschutzschalter 1, das elektromagnetische Schaltgerät 2 und der Vernetzungsbaustein haben eine Baubreite von 45 mm. Das Hilfsschaltermodul 3 hat eine Baubreite von 9 mm, so dass die Kombination aus Motorschutzschalter 1 und Hilfsschaltermodul 3 eine Baubreite von insgesamt 54 mm aufweist. Für den Sammelschienenadapter 11 ist ein Sammelschienenadapter-Typ mit einer Baubreite von 54 mm verwendet worden. Zusätzlich zu zwei nicht erkennbaren Schraubverbindungen besteht eine mechanische Verbindung zwischen Vernetzungsbaustein 12 und Sammelschienenadapter 11 über zwei Verbindungselemente 13. Die Verbindungselemente 13 sind seitlich mit dem Vernetzungsbaustein 12 und mit dem überstehenden Frontteil 114 des Sammelschienenadapters 11 verbunden. Die Verbindung des Lastabgangs wird in bekannter Weise mit Drehstrom-Sammelschienen 5 über den Sammelschienenadapter 11 und mit einer Busleitung 6 über den Vernetzungsbaustein 12 hergestellt.

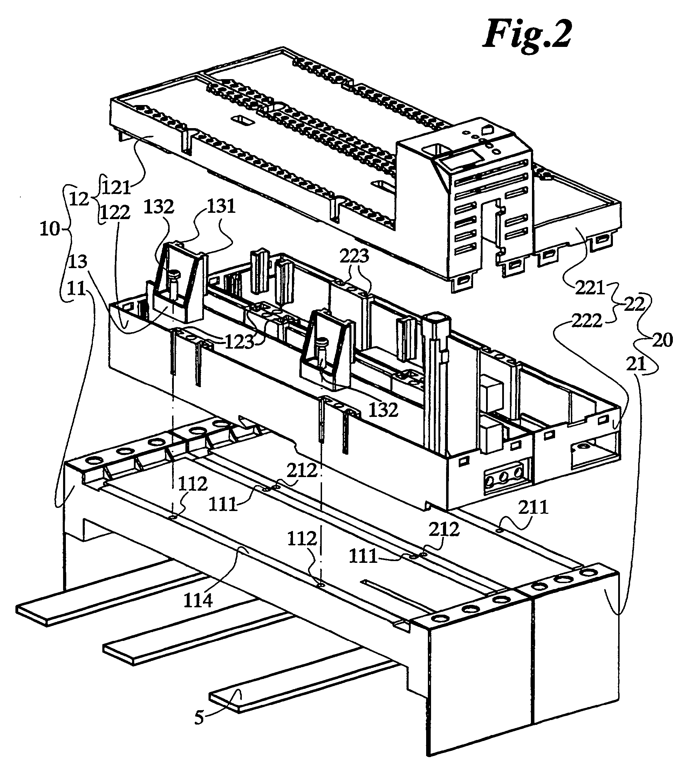

In Fig. 2 ist das zuvor beschriebene, erste Adaptersystem 10 zusammen mit einem unmittelbar daneben angeordneten zweiten Adaptersystem 20 ausführlicher dargestellt. Das erste Adaptersystem 10 besteht aus dem ersten Sammelschienenadapter 11 vom Sammelschienenadapter-Typ mit 54 mm Baubreite, dem ersten Vernetzungsbaustein 12 mit 45 mm Baubreite und den beiden Verbindungselementen 13. Der erste Vernetzungsbaustein 12 ist ein Vernetzungsbaustein-Typ mit eingebauter Intelligenz und besteht aus einem ersten Oberteil 121 sowie einem mit diesem zu verrastenden ersten Unterteil 122.

Das zweite Adaptersystem 20 besteht aus einem ersten Sammelschienenadapter 21 vom Sammelschienenadapter-Typ mit 45 mm Baubreite und einem zweiten Vernetzungsbaustein 22 mit 45 mm Baubreite. Der zweite Vernetzungsbaustein 22 ist ein Vernetzungsbaustein-Typ ohne Intelligenz und besteht aus einem zweiten Oberteil 221 sowie einem mit diesem zu verrastenden zweiten Unterteil 222. Die Verbindung zwischen zweitem Sammelschienenadapter 21 und zweitem Vernetzungsbaustein 22 geschieht über vier Schraubverbindungen. Von diesen Schraubverbindungen sind frontseitig im Sammelschienenadapter 21 angeordnete Gewindebohrungen 211 und 212 zu erkennen, wobei von den ersten beiden Gewindebohrungen 211 nur eine zu sehen ist und die zweiten beiden Gewindebohrungen 212 den ersten gegenüber liegen. Die Verbindung zwischen erstem Sammelschienenadapter 11 und erstem Vernetzungsbaustein 12 geschieht über zwei Schraubverbindungen, von denen die frontseitig im Sammelschienenadapter 11 angeordneten ersten beiden Gewindebohrungen mit 111 bezeichnet sind. Gegenüber diesen beiden Schraubverbindungen besteht eine Verbindung über die beiden Verbindungselemente 13. Die Verbindungselemente 13 enthalten T-förmige Anformungen 131, die beim Anbau unter Herstellung von Nut-Feder-Verbindungen in entsprechende seitliche Nuten 123 des ersten Unterteils 122 eingreifen. Das erste Unterteil 122 weist für diese Verbindungsmöglichkeit an der gegenüberliegenden Seite, ebenso an beiden Seiten das zweite Unterteil 222 gleichartige Nuten 123 bzw. 223 auf. Beim Herstellen der vollständigen Verbindung zwischen erstem Vernetzungsbaustein 12 und erstem Sammelschienenadapter 11 greifen Schrauben 132 über entsprechende Durchbrüche in den Verbindungselementen 13 in zweite Gewindebohrungen 112 im gegenüber dem Vemetzungsbaustein 12 überstehenden Frontteil 114 des Sammelschienenadapters 11 ein. Durch die Möglichkeit, Sammelschienenadapter-Typen verschiedener Baubreite (im Beispiel 45 mm und 54 mm) mit Vernetzungsbaustein-Typen gleicher Baubreite (im Beispiel 45 mm) können Schalt- und Steuergeräte unterschiedlicher Baubreite (im Beispiel 45 mm und 54 mm) und Schalt- und Steuergeräte einer Baubreite (im Beispiel 45 mm) in Kombination mit seitlich angebauten Hilfsmodulen einer weiteren Baubreite (im Beispiel 9 mm) so aneinander gereiht werden, dass durch die verwendeten Sammelschienenadapter-Typen die Sammelschienen 5 lückenlos überdeckt werden.

Die vorliegende Erfindung ist nicht auf die vorstehend beschriebenen Ausführungsformen beschränkt, sondern umfasst auch alle im Sinne der Erfindung gleichwirkenden Ausführungsformen wie sie in den abhängigen Ansprüchen definiert sind. So lässt sich die Menge der Sammelschienenadapter-Typen durch Hinzunahme von Typen mit weiteren Baubreiten, beispielsweise mit 63 mm und 72 mm Baubreite, erweitern.

## Patentansprüche

1. Adaptersystem für modulare Lastabgänge, bestehend aus
- einem Sammelschienenadapter (11, 21) und
- einem darauf befestigten Vernetzungsbaustein (12; 22) für aufzusetzende elektrische Schalt- und Steuergeräte (1; 2), wobei
- der Vernetzungsbaustein (12; 22) von einer aus mindestens einem Vernetzungsbaustein-Typ bestehenden ersten Menge mit einer einheitlichen, ersten Baubreite stammt, und mit dem Sammelschienenadapter (11, 21) üher ein Verbindungselement (132) verbindbar ist **dadurch gekennzeichnet, dass**
- der Sammelschienenadapter (11; 21) von einer aus mindestens zwei Sammelschienenadapter-Typen bestehenden Menge mit der ersten Baubreite und wenigstens einer demgegenüber größeren, weiteren Baubreite stammt und
- der Vernetzungsbaustein (12; 22) zusätzlich seitlich mit dem überstehenden Frontteil (114) eines Sammelschienenadapters (11) größerer Baubreite über mindesten das Verbindungselement (132) verbindbar ist.

2. Adaptersystem nach Anspruch 1, **dadurch gekennzeichnet, dass** zwischen Vernetzungsbaustein (12; 22) und Verbindungselement (13) eine Nut-Feder-Verbindung (123, 131; 223, 131) vorgesehen ist.

3. Adaptersystem nach einem der vorstehenden Ansprüche, **dadurch gekennzeichnet, dass** an Sammelschienenadapter (11) größerer Baubreite und am Verbindungselement (13) eine Schraubverbindung (112, 132) vorgesehen ist.

4. Adaptersystem nach vorstehendem Anspruch, **dadurch gekennzeichnet, dass** die Schraubverbindung (112, 132) Teil einer Schraubverbindung zwischen einem Vernetzungsbaustein (12; 22) und einem Sammelschienenadapter (21) gleicher Baubreite ist.

## Claims

1. An adapter system for modular load outlets, consisting of
- a busbar adapter (11, 21) and
- a networking unit (12; 22) fastened thereon for electrical switchgear and control gear (1; 2) to be set in place,
- the networking unit (12, 22) originating from a first set consisting of at least one networking unit type with a uniform, first structural width and being connectable to the busbar adapter (11, 21) via a connection element (132),
**characterised in that**
- the busbar adapter (11, 21) originates from a set consisting of at least two busbar adapter types with the first structural width and at least one comparatively larger, further structural width and
- the networking unit (12; 22) is additionally laterally connectable to the protruding front part (114) of a busbar adapter (11) of greater structural width via at least the connection element (132).

2. An adapter system according to claim 1, **characterised in that** a tongue and groove joint (123, 131; 223, 131) is provided between networking unit (12, 22) and connection element (13).

3. An adapter system according to one of the preceding claims, **characterised in that** a screw connection (112, 132) is provided on the busbar adapter (11) of greater structural width and on the connection element (13).

4. An adapter system according to the preceding claim, **characterised in that** the screw connection (112, 132) is part of a screw connection between a networking unit (12; 22) and a busbar adapter (21) of identical structural width.

## Revendications

1. Système d'adaptation pour sorties de charge modulaire, constitué de:
un adaptateur de barres collectrices (11, 21) ; et
un module de réticulation (12 ; 22) qui y est fixé, pour des dispositifs de commutation et de commande électriques devant être appliqués (1 ; 2) ;
le module de réticulation (12 ; 22) provenant d'une première quantité constituéed'au moins un type de module de réticulation avec une première largeur de construction unitaire, et pouvant être raccordé à l'adaptateur de barres collectrices (11, 21) par l'intermédiaire d'un élément de raccordement (132);
**caractérisé en ce que**
l'adaptateur de barres collectrices (11 ; 21) provient d'une quantité constituée d'au moins deux types d'adaptateurs de barres collectrices ayant la première largeur de construction et au moins une largeur de construction additionnelle supérieure à celle-ci ;
le module de réticulation (12 ; 22) peut être raccordé en outre latéralement avec la partie frontale en saillie (114) d'un adaptateur de barres collectrices (11) à largeur de construction plus grande, par au moins l'élément de raccordement (132).

2. Système d'adaptation selon la revendication 1, **caractérisé en ce qu'**un raccordement à languette et rainure (123, 131 ; 223, 131) est agencé entre le module de réticulation (12 ; 22) et l'élément de raccordement (13)

3. Système d'adaptation selon l'une des revendications précédentes, **caractérisé en qu'**un raccordement à vis (112, 132) est agencé sur l'adaptateur de barres collectrices (11) à la largeur de construction la plus grande et sur l'élément de raccordement (13).

4. Système d'adaptation selon la revendication précédente, **caractérisé en ce que** le raccordement à vis (112, 132) fait partie d'un raccordement à vis entre un module de réticulation (12 ; 22) et un adaptateur de barres collectrices (21) à largeur de construction identique.
